# EUROPÄISCHE PATENTANMELDUNG

(11) **EP 0 895 036 A2**
(43) Veröffentlichungstag der Anmeldung: **03.02.1999**
(21) Anmeldenummer: 98250252.8
(22) Anmeldetag: 09.07.1998
(51) Int. Cl.: F25B 6/02, F25B 29/00, F25B 30/02

(54) **Wärmeerzeugungs- oder Kühlanlage**

(30) Priorität: 10.07.1997 DE 19731185
(71) Anmelder: Hecker, Monica, 17139 Malchin (DE)
(72) Erfinder: Hecker, Tomas, 17139 Malchin (DE)
(74) Vertreter: Effert, Bressel und Kollegen

(57) **Zusammenfassung**

Wärmeerzeugungs- und eine Kühlanlage, wobei die Anlage als Wärmepumpenkreislauf ausgelegt ist und folgende wesentliche Merkmale aufweist:
a. mindestens ein Drosselventil (10),
b. mindestens einen Verdampfer (20),
c. mindestens einen Verdichter (30) und
d. mindestens zwei parallel zueinander geschaltete Verflüssiger (41,42,43),
e. wobei Rücklaufleitungen (51,52,53) von den Verflüssigern (41,42,43) zu den Drosselventilen (10) vorgesehen sind, und
f. wobei ferner jeder Verflüssiger (41,42,43) mit den Drosselventilen (10) über mindestens eine separate Rücklaufleitung (51,52,53) verbunden ist.

## Beschreibung

Die Erfindung betrifft eine Wärmeerzeugungs- und eine Kühlanlage und die Verwendung dieser Anlage zur Beheizung von Innenräumen in Gebäuden bzw. zur Kühlung von Kühlräumen.

Zur Beheizung von Innenräumen in Gebäuden sind verschiedene Heizungstypen bekannt. So gibt es beispielsweise Schwerkraftheizungen, bei denen Wasser als Wärmetransportmittel eingesetzt wird. Das Wasser wird in diesem Falle in einem Wärmeerzeuger, beispielsweise einem Öl- oder Gasbrenner erhitzt. Das erhitzte Wasser gelangt in einen Kreislauf mit Heizkörpern, die sich innerhalb der Innenräume befinden. Das Wasser gibt die Wärme über die Heizkörper ab, so daß die Innenräume aufgeheizt werden. Das dadurch abgekühlte Wasser wird wieder zum Wärmeerzeuger zurückgeführt. Dieses System arbeitet, abgesehen vom hydrostatischen Druck innerhalb des Systems, im wesentlichen bei Atmosphärendruck.

Nachteilig bei dieser Anlage ist der mangelhafte Warmwasserumlauf. Häufig werden ungünstig gelegene Heizungsrohrstränge nur ungenügend von warmem Wasser durchströmt, so daß in diesen Bereichen eine ausreichende Heizleistung nicht gewährleistet ist. Zur Unterstützung der Kreislaufführung des Wassers werden daher bereits seit langem auch Umwälzpumpen eingesetzt. Dies ist jedoch nachteilig, da die Umwälzpumpen einen erheblichen elektrischen Energiebedarf aufweisen.

Derartige Heizungsanlagen können sowohl mit Heizkörpern als auch mit einer Fußbodenheizung betrieben werden. Im letzteren Falle werden Rohre mäanderförmig im Fußboden in den zu beheizenden Innenräumen verlegt. Die Vorlauftemperatur für eine Fußbodenheizung ist deutlich geringer als die Vorlauftemperatur bei Verwendung von Heizkörpern.

Die bekannten Warmwasserheizungen weisen aber den Nachteil auf, daß die Vorlauf- und die Rücklauftemperatur des Wärmetransportmittels deutlich voneinander verschieden sind, da die Heizleistung ausschließlich über die erhöhte Temperatur des Wassers gespeist wird; in den Heizkörpern oder den Heizungsschlangen einer Fußbodenheizung kühlt sich das Wasser ab. Ein erheblicher Teil der entstehenden Kosten bei einer Warmwasserheizung wird durch den Betrieb der Umwälzpumpe aufgebraucht, da viel Energie durch den Transport des relativ viskosen Wassers im Rohrsystem verloren geht. Diese Energie wird in Form elektrischer Energie zugeführt und führt zu einer zusätzlichen Erwärmung des Wärmetransportmittels. Wegen der hohen Stromkosten entstehen hierbei erhöhte Betriebskosten.

Im Gegensatz hierzu weisen Wasserdampfheizungen den Vorteil auf, daß die an die Innenräume zu übertragende Wärme in der Kondensationsenergie des Wassers gespeichert ist. Bei diesem Heizungssystem wird in einem Wärmeerzeuger Wasserdampf durch Verdampfung von Wasser, das sich in einem Reservoir befindet, gebildet. Dieser Wasserdampf wird über ein geeignetes Rohrsystem durch Heizkörper geleitet. Dort kann der Dampf teilweise kondensieren und damit die Wärme abgeben. Das Kondensat wird wieder zum Wärmeerzeuger zurückgeführt. Diese Heizung kann mit Atmosphärendruck oder auch mit Unter- oder Überdruck betrieben werden. Dadurch kann die jeweilige Betriebstemperatur durch Wahl der geeigneten Siedetemperatur des Wassers in der Heizung eingestellt werden.

Eine derartige Dampfheizungsanlage ist in DE-OS 20 27 496 beschrieben. Vorzugsweise soll der Wärmeträger in einem Druckbereich verwendet werden, der unter dem Atmosphärendruck liegt. In dem Dokument wird außerdem erwähnt, daß als Heizmittel beispielsweise auch ein Kältemittel unter einem gewissen Überdruck eingesetzt werden kann. Diese Anlage besteht aus einem Wärmeerzeuger, einem Dampfsammler, Heizkörpern und einem Kondensatsammler. Von dem Wärmeerzeuger gelangt der Wasserdampf in die Heizkörper, kühlt dort ab und kondensiert und gelangt danach über Einzelrohrstränge in den Kondensatsammler zurück. Als Wärmeerzeuger werden ein Wärmetauscher, ein Brenner oder eine elektrische Heizung vorgeschlagen.

Auch dieses Verfahren weist Nachteile auf. Insbesondere hat sich herausgestellt, daß die Beheizung mit Heizkörpern energetisch ungünstiger ist als eine Beheizung über Heizungsschlangen, die beispielsweise im Fußboden verlegt sind, da die Vorlauftemperatur des Heizmittels deutlich höher sein muß als die gewünschte Raumtemperatur. Ferner wurde durch Untersuchungen auch festgestellt, daß die in der Offenlegungsschrift beschriebene Anlage hinsichtlich der Rohrdurchmesser großzügig ausgelegt werden muß, um sicherzustellen, daß der Dampf bzw. das Wasser auch kontinuierlich im Kreislauf geführt wird. Die in der Offenlegungsschrift beschriebene Anlage weist keine zwangsgeführte Rückführung des Kondensats auf. Daher kann im Wärmeerzeuger befindliches Kondensat unter bestimmten Umständen durch die dort stattfindende Verdampfung in den vorgeschalteten Kondensatsammler zurückgedrückt werden, so daß die Wärmeerzeugung mangels flüssigen Heizmittels im Wärmeerzeuger unterbrochen wird und schlimmstenfalls sogar eine Überhitzung des Wärmeerzeugers stattfindet. Eine derartig instabiler Betriebszustand kann insbesondere dann auftreten, wenn die den Kreislauf bildenden Rohre, insbesondere die von den Heizkörpern zum Kondensatsammler zurückführenden Rohre, einen geringen Querschnitt aufweisen und wenn zudem eine geringe Bauhöhe der gesamten Anlage gewünscht wird, so daß der Höhenunterschied zwischen dem tiefstgelegenen Heizkörper und dem Kondensatsammler nur gering sein kann. In diesem Fall ist der durch die Schwerkraft hervorgerufene Überdruck im Kondensatsammler nicht mehr hoch genug, um Heizmittel zwangsweise in den Wärmeerzeuger zu überführen und damit sicherzustellen, daß immer genügend Kondensat im Wärmeerzeuger zur Verfügung steht.

Übliche Wärmeerzeugerquellen werden durch Befeuerung und elektrische Beheizung betrieben. Eine weitere Möglichkeit besteht darin, Wärme mit einer Wärmepumpe zu erzeugen. Hierbei wird Wärme von einem kälteren Wärmereservoir zu den wärmeren Innenräumen transportiert. Zu diesem Zweck wird die über einen Verdampfer von einem Wärmereservoir, beispielsweise dem Erdreich, aufgenommene Wärmeenergie auf ein in der Anlage enthaltenes Wärmeübertragungsmittel übertragen, das anschließend in einem Verdichter komprimiert wird und sich dabei erhitzt. Durch die erhöhte Temperatur des Mittels wird Wärme über einen Verflüssiger auf die Innenräume übertragen. Für die Kompression des Wärmeübertragungsmittels muß mechanische Arbeit aufgewendet werden. Derartige Anlagen sind ebenfalls seit langem bekannt.

Das vorgenannte Prinzip kann auch für die Kühlung eingesetzt werden, beispielsweise von Lebensmitteln in Kühlmöbeln (Kühlschränken, Gefriertruhen), Kühlhäusern oder -hallen sowie in Fahrzeugen mit Kühleinrichtung und ferner in Kühlaggregaten zur Verflüssigung von Gasen. Hierzu wird die in den zu kühlenden Gegenständen enthaltene Wärme über den Verdampfer auf das flüssige Wärmeübertragungsmittel übertragen, das dabei verdampft und anschließend mit einem Verdichter komprimiert wird. Dabei kühlt sich das Mittel wieder ab und kann bei nachmaligem Durchlauf durch den Verflüssiger Wärme an eine externe Wärmesenke abgeben, beispielsweise die Umgebungsluft.

Nachteilig an den bekannten Anlagen ist, daß bei diesen häufig eine ungewollte Kondensation des Wärmeübertragungsmittels außerhalb der Rohrsysteme der Verflüssiger stattfindet oder beispielsweise auch nur in einigen dieser parallel geschalteten Rohrsysteme, so daß die Verflüssiger ungleichmäßig thermisch belastet werden. Dadurch bilden sich instabile Betriebszustände aus bis hin zum vollständigen Ausfall der Heizung oder Kühlung.

Der vorliegenden Erfindung liegt von daher das Problem zugrunde, die Nachteile der bekannten Anlagen zu vermeiden und insbesondere eine Anlage zur Wärmeerzeugung oder zum Kühlen mit einem Wärmepumpenkreislauf bereitzustellen, mit der es möglich ist, mit einfacher Konstruktion einen sehr hohen Wirkungsgrad zu realisieren. Die Anlage soll auch einen robusten Betrieb ermöglichen, vorzugsweise mittels einer sich selbst regelnden Kondensation des Wärmeübertragungsmittels im Verflüssiger.

Das Problem wird gelöst durch eine Anlage zur Wärmeerzeugung oder zum Kühlen nach den Ansprüchen 1 und 2 sowie durch eine Verwendung der Anlage zur Beheizung von Innenräumen in Gebäuden bzw. zur Kühlung von Kühlräumen nach Anspruch 11.

Die Anlage stellt einen Wärmepumpenkreislauf dar und weist folgende wesentlichen Merkmale auf:
a. mindestens ein Drosselventil,
b. mindestens einen Verdampfer,
c. mindestens einen Verdichter und
d. mindestens zwei parallel zueinander geschaltete Verflüssiger,
e. wobei Rücklaufleitungen von den Verflüssigern zu den Drosselventilen vorgesehen sind, und
f. wobei ferner jeder Verflüssiger mit den Drosselventilen über mindestens eine separate Rücklaufleitung verbunden ist.

Im Falle der Wärmeerzeugung dienen die Verflüssiger dazu, Wärme zu einem zu heizenden Medium, beispielsweise zu der zu heizenden Raumluft, zu überführen. Wird die Anlage zum Kühlen eingesetzt, dienen die Verdampfer zur Abführung von Wärme von einem zu kühlenden Medium, beispielsweise der Raumluft des Kühlgebäudes oder eines Kältemittels in einem Sekundär-Kühlkreislauf. In letzterem Falle ist der Verdampfer als Wärmetauscher ausgelegt.

Bevorzugte Ausführungsformen der Erfindung sind in den Unteransprüchen angegeben.

Im Wärmepumpenkreislauf ist als Medium ein Wärmeübertragungsmittel enthalten. Prinzipiell können hierzu Wasser, Ammoniak und Kohlendioxid eingesetzt werden. Vorteilhaft sind aber vorzugsweise Propan, iso-Butan oder andere Kohlenwasserstoffe, insbesondere nicht halogenierte Kohlenwasserstoffe, bzw. deren Gemische, wie azeotrope oder nicht azeotrope Gemische, beispielsweise R407C oder R1 34A. Das Wärmeübertragungsmittel sollte eine Kondensationstemperatur bei vorgegebenen Innendruck in der Anlage aufweisen, die eine Kondensation des Mittels im Rohrsystem des Verflüssigers zuläßt. Dadurch wird eine Wärmeübertragung ermöglicht, die fast ausschließlich durch die innere (Kondensations)energie des Wärmeübertragungsmittels vermittelt wird. Mit dieser Wärmeübertragung ist eine sehr viel wirksamere Betriebsweise der Anlage möglich, da keine großen Flüssigkeitsmengen ineffizient in der Anlage bewegt werden müssen, die, bezogen auf die Masse des Mittels, nur relativ wenig Wärmeenergie durch Temperaturerhöhung speichern können.

Mit in üblicher Weise betriebenen Wärmepumpen zur Beheizung von Gebäuden wird unter günstigen Bedingungen ein Verhältnis der erhaltenen Heizenergie zum Energieaufwand von etwa 3 erreicht. Mit der erfindungsgemäßen Anlage wird dagegen ein Verhältnis von mindestens 4, bei weiterer Optimierung auch von 5 oder mehr erreicht.

Mit der erfindungsgemäßen Anlage kann ein sehr hoher Wirkungsgrad des Wärmepumpenkreislaufes erreicht werden, indem die von der Umgebung, beispielsweise dem zu kühlenden Gegenstand entzogene Wärme direkt vom Wärmeübertragungsmittel im Verdampfer aufgenommen wird. Daher findet beim Wärmeübergang an dieser Komponente nur ein geringer Wirkungsgradverlust statt. Entsprechendes gilt auch für die Kondensation des Wärmeübertragungsmittels in den Verflüssigern. Auch in diesem Fall wird die vom Wärmeübertragungsmittel abgegebene Wärme ohne Zwischenschaltung weiterer Anlagenkomponenten direkt an die Umgebung übertragen.

Die erfindungsgemäßen Vorteile ergeben sich insbesondere durch Vorsehen von mindestens einem Fallrohr als Rücklaufleitung von jedem Verflüssiger zum Drosselventil. Das Fallrohr wirkt dabei wie eine Schwerkraftpumpe. Dadurch wird gewährleistet, daß von einem Rohrsystem abfließende kondensierte Flüssigkeit den Durchfluß durch das Rohrsystem eines anderen Verflüssigers und damit das Abfließen aus diesem Rohrsystem des anderen Verflüssigers nicht beeinträchtigt. Dadurch daß jedes Rohrsystem eine separate Rücklaufleitung aufweist, beeinflussen sich die rücklaufenden Flüssigkeitsströme des Wärmeübertragungsmittels nicht gegenseitig. Bei bekannten Anlagen müssen große Bauhöhen für die Fallrohre vorgesehen werden, um eine ausreichend starke Schwerkraftwirkung in den Fallrohren zu erzeugen. Mit der erfindungsgemäßen Anordnung separater Rücklaufleitungen für jedes Verflüssiger-Rohrsystem kann die Flüssigkeit dagegen auch ohne Zwangsführung durch alle parallel geschalteten Rohrsysteme gleichmäßig hindurchfließen, so daß mit der erfindungsgemäßen Anlage geringe Bauhöhen realisiert werden können und eine behindernde Beeinflussung der Rohrsysteme untereinander nicht auftritt. Die einzelnen Rücklaufleitungen können entweder separat an einen nachgeschalteten Sammler oder direkt an separate Drosselventile angeschlossen werden, oder sie werden vorher miteinander verbunden.

Daher ist unter der Angabe, daß die Verflüssiger mit den Drosselventilen über mindestens eine separate Rücklaufleitung verbunden sind, so zu verstehen, daß separate Rücklaufleitungen auf Fallstrecken vorgesehen sind und diese gegebenenfalls im Anschluß an die Fallstrecken wieder miteinander verbunden sind, nicht aber, daß die Rücklaufleitungen unbedingt separat mit dem Drosselventil verbunden sind. Vielmehr können die Rücklaufleitungen auch vor der Verbindung mit dem Drosselventil miteinander verbunden sein. Beispielsweise können die Rücklaufleitungen gemeinsam oder separat in ein Sammelgefäß einmünden, und es kann eine gemeinsame Leitung vom Sammelgefäß zum Drosselventil vorgesehen sein.

In der erfindungsgemäßen Anlage sind die Rohrsysteme in den Verflüssigern in Form von Heizungsschlangen oder Wärmetauscherschlangen sowie Sammelleitungen ausgebildet, wobei mehrere Heizungs- oder Wärmetauscherschlangen rücklaufseitig an die Sammelleitungen angeschlossen sind und diese wiederum, gegebenenfalls über weitere Sammelleitungen, an die separaten Rücklaufleitungen. Diese Rohrsysteme können beispielsweise zur Beheizung von Gebäuden als Fußbodenheizung ausgelegt sein. In jedem Raum des zu beheizenden Gebäudes dient dann beispielsweise ein Rohrsystem zur Beheizung eines Raumes. Falls die Anlage zur Kühlung verwendet wird, dienen die Wärmetauscherschlangen des Rohrsystems zur Abfuhr der Wärme an ein Reservoir, beispielsweise das Erdreich oder die Umgebungsluft, das die abgeführte Wärme aufnimmt.

Die Heizungs- bzw. Wärmetauscherschlangen, Sammelleitungen und Rücklaufleitungen weisen einen vorzugsweise geringen Innendurchmesser auf (beispielsweise 4 mm bei einem Kupferrohr mit einem Außendurchmesser von 6 mm und einer Wanddicke von 1 mm). Dadurch ist es möglich, in der Anlage mit geringen Wärmeübertragungsmittelmengen auszukommen. Außerdem sind die Rohre mit geringem Durchmesser deutlich billiger als Rohre mit größerem Durchmesser und zudem leichter verarbeit- und verlegbar. Der Vorteil geringer Innendurchmesser der Rohre kann mit den bekannten Anlagen nicht realisiert werden, da diese dem hindurchfließenden Wärmeübertragungsmittel einen erheblichen Strömungswiderstand entgegensetzen, so daß eine sichere und problemlose Beheizung aller Räume nicht möglich ist. Dieses Problem wird erst mit der erfindungsgemäßen Anlage gelöst.

Es hat sich als besonders vorteilhaft herausgestellt, die Heizungs- bzw. Wärmetauscherschlangen innerhalb eines Rohrsystems mit gleichem Durchmesser auszuführen, beispielsweise mit einem Außendurchmesser von 4 bis 10 mm, vorzugsweise von 6 mm. Ferner sollten die Rücklaufleitungen einen Außendurchmesser von 4 bis 10 mm, vorzugsweise von 6 bis 8 mm, aufweisen. Die Heizungs- oder Wärmetauscherschlangen haben außerdem vorzugsweise denselben Außendurchmesser wie die Sammelleitungen.

Mit der vorgegebenen Konfiguration wird folgende Betriebsweise ermöglicht:

Die Flüssigkeit kondensiert in den Heizungsschlangen der als Rohrsystem ausgebildeten Verflüssiger. Dabei verringert sich das Volumen des Wärmeübertragungsmittels. Durch Anschluß mehrerer Heizungs- bzw. Wärmetauscherschlangen an eine Sammelleitung und gegebenenfalls mehrerer Sammelleitungen an eine Hauptsammelleitung wird der Gesamtquerschnitt der Leitungen innerhalb eines Rohrsystems verringert, bevor die in diesen Rohren enthaltene Wärmeübertragungsflüssigkeit in die Fallrohre eintritt.

Der Vordruck des vom Verdichter kommenden Gases mit hohem Energiegehalt ist im Bereich der einzelnen Fußbodenheizungsabschnitte etwa gleich. Über geeignete Einleitungsrohre mit großem Querschnitt wird das Gas in die Verteilungen geleitet. Indem das gasförmige Wärmeübertragungsmittel zunehmend Wärme abgibt, findet eine Verflüssigung des Mittels statt. Dadurch wird ein geringerer Gesamtquerschnitt im Rohrsystem zur Durchströmung mit dem Mittel benötigt. Das vollständig verflüssigte Mittel fällt nach Durchlauf der Heizungs-bzw. Wärmetauscherschlangen und der Sammelleitungen, durch die Schwerkraft unterstützt, in der Falleitung nach unten. Indem jedem Verflüssiger eine separate Rücklaufleitung zugeordnet ist, steht jedem Kreis eine eigene Schwerkraftpumpe zur Verfügung.

Bei mehreren übereinander angeordneten Rohrkreisläufen wird das in den Kreisläufen in den oberen Etagen enthaltene Wärmeübertragungsmittel durch die stärkere Schwerkraftwirkung des in den zugeordneten Fallrohren enthaltenen flüssigen Übertragungsmittels mit größerer Geschwindigkeit nach unten abgesaugt als Wärmeübertragungsmittel, das sich in Kreisläufen in den unteren Etagen befindet. Dadurch gerät zunehmend mehr gasförmiges Übertragungsmittel in den oberen Etagen in die hinteren Zusammenführungen der Sammelleitungen mit reduziertem Gesamtquerschnitt. Das teilweise mit flüssigem Mittel vermischte gasförmige Übertragungsmittel in diesen Rohren gerät dadurch in turbulente Strömung, so daß sich ein der Schwerkraftpumpenwirkung entgegengerichteter Widerstand aufbaut. Daher kann die Flüssigkeitssäule in den Fallrohren abreißen oder zumindest teilweise unterbrochen oder behindert werden. Die weitere Gaseinleitung in die Heizungs- oder Wärmetauscherschlangen dieses Rohrsystems wird damit behindert. In dieser Phase wird nachströmendes gasförmiges vom Verdichter kommendes Wärmeübertragungsmittel nicht mehr in diejenigen Rohrsysteme einströmen, in denen die Strömung behindert ist, sondern nur noch in solche Abschnitte, in denen es zu den beschriebenen Behinderungen des Stoffflusses des Wärmeübertragungsmittels nicht gekommen ist. Dort können sich aber anschließend dieselben Vorgänge wiederholen wie zuvor beschrieben in den Kreisläufen der oberen Etagen.

Indem gleichzeitig die weitere Durchströmung der Rohrsysteme in den oberen Etagen behindert wird und sich die Durchströmungsgeschwindigkeit verringert, steigt der Flüssigkeitsanteil in diesen Abschnitten durch wirksameren Wärmeaustausch wieder, so daß die Flüssigkeitsschwerkraftpumpe in diesen Bereichen nachfolgend wieder anläuft.

Daher ist mit dem beschriebenen Heizungs- bzw. Kühlsystem ein Selbstregelungsprozeß verwirklicht, der zu einer sehr gleichmäßigen Wärmeverteilung über mehrere parallel geschaltete Verflüssigerbereiche führt. Dadurch ist eine Regelung des Wärmeflusses in einzelnen Räumen ohne äußere Einflußnahme ohne weiteres möglich. Selbstverständlich können auch manuell einstellbare oder automatisch regelbare Ventile in einzelne Rohrsysteme integriert werden, um die Temperatur der Innenräume separat einzustellen.

Weiterhin ist der Einsatz von Sammlern für das zurückgelaufene Wärmeübertragungsmittel vorteilhaft, die zwischen die Rücklaufleitungen und die Drosselventile geschaltet sind.

Ferner kann die Anlage auch für eine indirekte Beheizung oder Kühlung ausgelegt sein. Für diesen Fall sind zwei Kreisläufe vorgesehen: ein Primärkreislauf, der den Verdampfer, das Drosselventil, den Verdichter, den Verflüssiger und gegebenenfalls den Sammler umfaßt, sowie einen Sekundärkreislauf. Für eine Heizungsanlage wird der Verflüssiger gleichzeitig als Flüssig-Flüssig-Wärmetauscher ausgelegt, der sekundärseitig an den Sekundärkreislauf zur eigentlichen Beheizung angeschlossen ist und dadurch Wärme an den Sekundärkreislauf überträgt. Für eine Kühlanlage ist der Verdampfer in entsprechender Weise sekundärseitig an einen Kühlkreislauf angeschlossen, um Wärme vom Sekundärkreislauf in den Primärkreislauf zu übertragen. Selbstverständlich können auch beide, sowohl der Verdampfer als auch der Verflüssiger, jeweils sekundärseitig an jeweilige Heiz- bzw. Kühlkreisläufe angeschlossen sein. Wird eine derartige Anlage zur Gebäudeheizung verwendet, wird der Sekundärkreislauf am Verflüssiger als Heizungsquelle verwendet, während der Sekundärkreislauf am Verdampfer zur Wärmeaufnahme von einem Wärmereservoir, beispielsweise dem Erdreich oder der Außenluft, angeschlossen ist. Bei Auslegung der Anlage zur Kühlung gilt entsprechend das Umgekehrte, d.h. der Sekundärkreislauf am Verdampfer wird zur Kühlung beispielsweise von Kühlräumen eingesetzt, während der Sekundärkreislauf am Verflüssiger zur Abführung der Wärme an ein Wärmereservoir dient.

Bei Anwendung einer derartigen Anlage zur Gebäudeheizung kann die erfindungsgemäße Anordnung auch im Sekundärkreislauf realisiert werden, wenn der Verflüssiger gleichzeitig zur Verdampfung eines weiteren Wärmeübertragungsmittels im Sekundärheizkreislauf dient. In diesem Fall sind die Raumheizungsschlangen für verschiedene Räume jeweils an ein Fallrohr als Rücklaufleitung zum Verflüssiger angeschlossen. Das in die Heizungsschlangen einströmende gasförmige Wärmeübertragungsmittel wird in den Heizungsschlangen kondensiert und gibt dabei Wärme an die Raumluft ab. Das kondensierte Mittel strömt über das Fallrohr zum Verflüssiger wieder zurück. Gegebenenfalls wird ein weiterer Sammler dazwischengeschaltet, um ein Zurückströmen von Kondensat in den Verflüssiger zu vermeiden. Durch diese Anordnung ist auch für diesen Fall ein wirksamer Umlauf des Wärmeübertragungsmittels im Sekundärkreislauf gewährleistet.

Anhand der nachfolgend dargestellten Figuren soll die Erfindung näher erläutert werden. Es zeigen:
- Figur 1:: schematische Darstellung einer Heizungsanlage für ein Gebäude;
- Figur 2:: schematische Darstellung einer Heizungsanlage (Sekundärkreislauf) mit angeschlossener Wärmepumpe (Primärkreislauf).

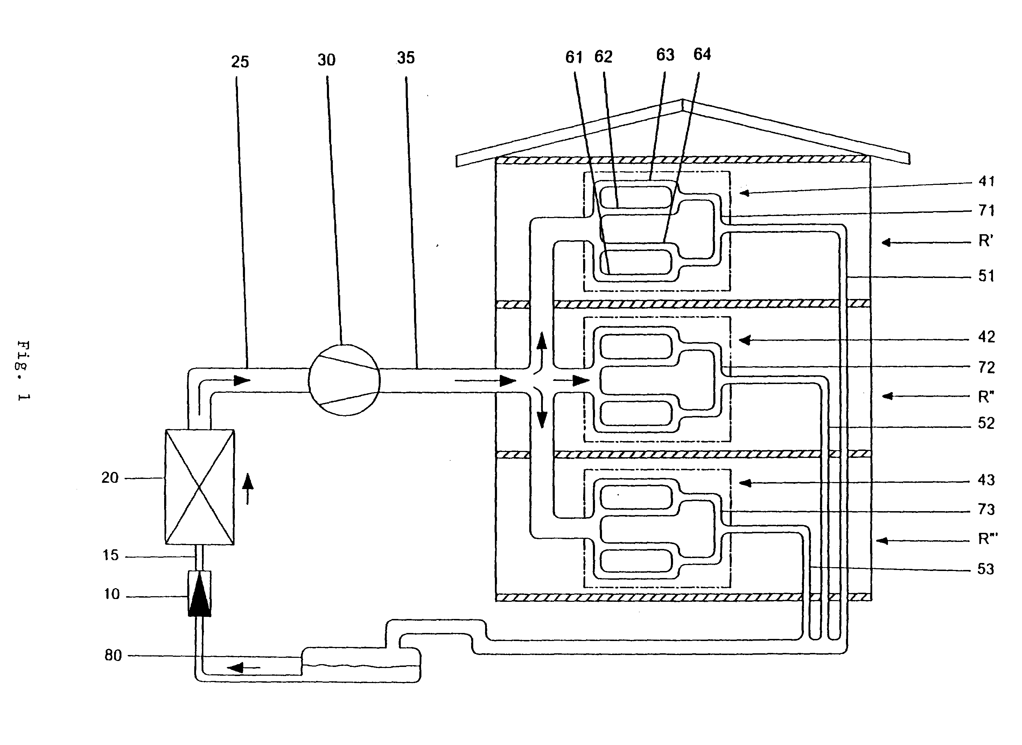

In Figur 1 ist eine Heizungsanlage für ein Gebäude gezeigt. Die einzelnen zu beheizenden Räume sind mit den Bezugszeichen R, R', R" gekennzeichnet. Der hier angewendete Wärmepumpenkreislauf weist ein Drosselventil 10, eine Einspritzleitung 15, einen Verdampfer 20, eine Ansaugleitung 25, einen Verdichter 30, eine Druckleitung 35, und Verflüssiger 41,42,43 auf, wobei letztere als Rohrsysteme zur eigentlichen Beheizung ausgelegt sind. Diese befinden sich in den zu beheizenden Räumen, wobei jeweils mindestens ein Rohrsystem in einem Raum untergebracht ist. Die Rohrsysteme können als Fußboden-, Wand- oder Deckenheizungen eingebaut sein. Hierzu sind Heizungsschlangen 61,62,63,64, beispielsweise aus Kupferrohr, in den Fußbodenestrich oder eine dünne Schüttung in den Wand- oder den Deckenputz verlegt.

Ferner ist im Wärmepumpenkreislauf ein Sammler 80 enthalten, der als Flüssigkeitsreservoir dient.

Das aus dem Verdampfer 20 gasförmig austretende Wärmeübertragungsmittel gelangt über die Ansaugleitung 25 in den Verdichter 30 und wird dort komprimiert. Am Ausgang des Verdichters hat das Mittel eine höhere Temperatur als am Eingang. Anschließend gelangt das Wärmeübertragungsmittel über die Druckleitung 35 in die parallel zueinander geschalteten Verflüssiger 41,42,43, die als Rohrsysteme in den Räumen R, R', R" ausgebildet sind und zur Raumheizung dienen. In den Heizungsschlangen 61,62,63,64 des Rohrsystems kondensiert das Wärmeübertragungsmittel und gibt dabei die Kondensationswärme an die Raumluft ab, gegebenenfalls über den Bodenestrich oder den Wand- oder Deckenputz.

Von jedem Rohrsystem führt ein Fallrohr 51,52,53 als Kondensatleitung zurück zum Sammler 80. Die Heizungsschlangen 61,62,63,64 in den Rohrsystemen haben einen Außendurchmesser von 6 mm. Sie gehen in Sammelleitungen 71,72,73 über, die vorzugsweise denselben Außendurchmesser aufweisen. Das in den Heizungsschlangen kondensierte gasförmige Wärmeübertragungsmittel wird über die Sammelleitungen in die Fallrohre 51,52,53 geleitet. Durch die Kondensation des Wärmeübertragungsmittels verringert sich das Transportvolumen des Mittels erheblich, so daß durch eine Verringerung des Gesamtquerschnitts der Leitungen im Rohrsystem durch Anschluß mehrerer Heizungsschlangen an eine Sammelleitung ein sehr gleichmäßiger Stofffluß erreicht wird. Außerdem ist zur Aufrechterhaltung eines Flüssigkeitsumlaufes im Wärmepumpenkreislauf eine Mindestlineargeschwindigkeit des Wärmeübertragungsmittels unbedingt erforderlich. Indem die Fallrohre einzeln an die Rohrsysteme angeschlossen sind, wird eine effiziente Saugwirkung der abfließenden Flüssigkeit erzeugt. Dadurch wird fortwährend neues Gas in die Heizungsschlangen nachgeführt. Die über die Fallrohre zurückgeführte Flüssigkeit gelangt in den Sammler und von dort in das Drosselventil 10. Dort wird die Flüssigkeit entspannt und abgekühlt.

Eine zum Kühlen dienende erfindungsgemäße Anlage ist genauso ausgelegt wie die Anlage gemäß Figur 1. Der Unterschied besteht darin, daß die Funktion des Verdampfers in diesem Fall zur Kühlung des zu kühlenden Gutes oder der Kühlräume dient und die Verflüssiger zur Abführung der Wärme an ein Wärmereservoir.

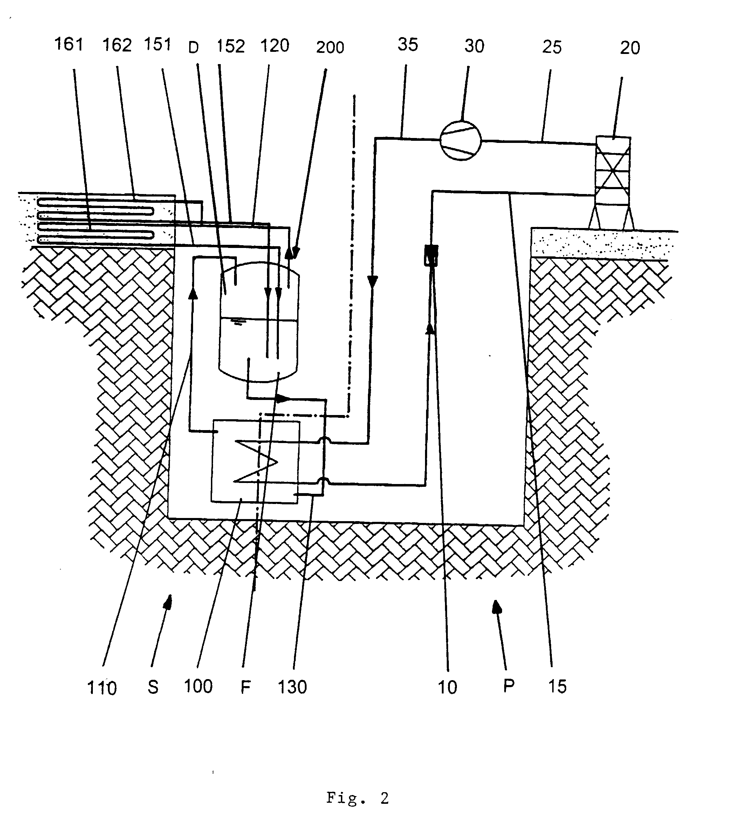

In Figur 2 ist eine Heizungsanlage mit angeschlossener Wärmepumpe im Primärkreislauf schematisch dargestellt. Der Primärkreislauf P besteht wiederum aus einem Drosselventil 10, einer Einspritzleitung 15, einem Verdampfer 20, einer Saugleitung 25, einem Verdichter 30, einer Druckleitung 35 und einem Verflüssiger, wobei in diesem Fall der Verflüssiger als Wärmetauscher 100 ausgebildet ist, der die im Primärkreis erzeugte Wärme auf den Sekundärkreislauf S überträgt. Von dort gelangt das sekundärseitige Wärmeübertragungsmittel über eine Leitung 110 zuerst in einen Sammler 200, in dem sich ein Dampfraum D und ein Flüssigkeitsraum F befindet. Von dort wird gasförmiges Mittel über eine Leitung 120 in die einzelnen Rohrsysteme, hier Heizschlangen 161,162, zum Beheizen, beispielsweise von Gebäuderäumen, überführt. In diesen Heizschlangen kondensiert das Mittel wieder und gelangt über separate Rücklaufleitungen 151,152 in den Flüssigkeitsraum des Sammlers zurück. Das flüssige Mittel wird über eine weitere Leitung 130 zum Wärmetauscher zurückgeleitet, wo dieses wieder verdampft.

Das vorstehend dargestellte Wärmeverteilungssystem mit indirekter Beheizung kann in entsprechender Weise auch zum Kühlen eingesetzt werden, wenn der Verdampfer 20 im Primärkreis als Flüssig-Flüssig-Wärmetauscher ausgelegt wird, an den sich ein Sekundärkreislauf zur Kühlung anschließt. Der Verflüssiger dient in diesem Falle zur Wärmeabfuhr aus dem Primärkreis.

Alle offenbarten Merkmale sowie Kombinationen der offenbarten Merkmale sind Gegenstand dieser Erfindung, soweit diese nicht ausdrücklich als bekannt bezeichnet werden.

### Bezugszeichenliste:

- 10: Drosselventil
- 15: Einspritzleitung
- 20: Verdampfer
- 25: Ansaugleitung
- 30: Verdichter
- 35: Druckleitung
- 41, 42, 43: Verflüssiger
- 51, 52, 53: Fallrohre
- 61, 62, 63, 64: Wärmetauscherschlangen
- 71, 72, 73: Sammelleitungen
- 80: Sammler
- 100: Wärmetauscher
- 110: Leitung zwischen Wärmetauscher 100 und Sammler 200
- 120: Leitung vom Sammler 200 zu den Heizschlangen 161,162
- 130: Rückleitung vom Sammler 200 zum Wärmetauscher 100
- 151, 152: Rückleitungen von den Heizschlangen zum Sammler 200
- 161, 162: Heizschlangen
- 200: Sammler
- R',R", R"': zu beheizende Räume
- P: Primärkreislauf
- S: Sekundärkreislauf
- F: Flüssigkeitsraum im Sammler 200
- D: Dampfraum im Sammler 200

## Patentansprüche

1. Wärmeerzeugungsanlage mit einem Wärmepumpenkreislauf, der
a. mindestens ein Drosselventil,
b. mindestens einen Verdampfer,
c. mindestens einen Verdichter und
d. mindestens zwei parallel zueinander geschaltete Verflüssiger zur Überführung von Wärme zu einem zu heizenden Medium aufweist,
e. wobei Rücklaufleitungen von den Verflüssigern zu den Drosselventilen vorgesehen sind,
dadurch gekennzeichnet, daß jeder Verflüssiger (41,42,43) mit den Drosselventilen (10) über mindestens eine separate Rücklaufleitung (51,52,53) verbunden ist.

2. Kühlanlage mit einem Wärmepumpenkreislauf, der
a. mindestens ein Drosselventil,
b. mindestens einen Verdampfer zur Abführung von Wärme von einem zu kühlenden Medium,
c. mindestens einen Verdichter und
d. mindestens zwei parallel zueinander geschaltete Verflüssiger aufweist,
e. wobei Rücklaufleitungen von den Verflüssigern zu den Drosselventilen vorgesehen sind,
dadurch gekennzeichnet, daß jeder Verflüssiger (41,42,43) mit den Drosselventilen (10) über mindestens eine separate Rücklaufleitung (51,52,53) verbunden ist.

3. Anlage nach einem der vorstehenden Ansprüche, dadurch gekennzeichnet, daß die Rücklaufleitungen (51,52,53) als Fallrohre ausgebildet sind.

4. Anlage nach einem der vorstehenden Ansprüche, dadurch gekennzeichnet, daß die Verflüssiger (41,42,43) in Form von Heizungs- oder Wärmetauscherschlangen (61,62,63,64) sowie Sammelleitungen (71,72,73) ausgebildet, mehrere Heizungs- oder Wärmetauscherschlangen rücklaufseitig an die Sammelleitungen angeschlossen und diese wiederum, gegebenenfalls über weitere Sammelleitungen, an die separaten Rücklaufleitungen (51,52,53) angeschlossen sind.

5. Anlage nach Anspruch 4, dadurch gekennzeichnet, daß alle Heizungs- oder Wärmetauscherschlangen (61,62,63,64) eines Verflüssigers (41,42,43) denselben Außendurchmesser aufweisen.

6. Anlage nach einem der Ansprüche 4 und 5, dadurch gekennzeichnet, daß die Heizungs- oder Wärmetauscherschlangen (61,62,63,64) einen Außendurchmesser von 4 bis 10 mm, vorzugsweise 6 mm, aufweisen.

7. Anlage nach einem der Ansprüche 4 bis 7, dadurch gekennzeichnet, daß die Rücklaufleitungen (51,52,53) einen Außendurchmesser von 4 bis 10 mm, vorzugsweise 6 bis 8 mm, aufweisen.

8. Anlage nach einem der Ansprüche 4 bis 8, dadurch gekennzeichnet, daß die Sammelleitungen (71,72,73) denselben Außendurchmesser aufweisen wie die Heizungs- oder Wärmetauscherschlangen (61,62,63,64) .

9. Anlage nach einem der vorstehenden Ansprüche, dadurch gekennzeichnet, daß die Rücklaufleitungen (51,52,53) in mindestens einen Sammler (80) für in der Anlage befindliches Wärmeübertragungsmittel münden und die Sammler mit den Drosselventilen (10) verbunden sind.

10. Anlage nach einem der vorstehenden Ansprüche, dadurch gekennzeichnet, daß die Anlage mit einem Wärmeübertragungsmittel befüllt ist, das eine Kondensationstemperatur bei vorgegebenen Innendruck in der Anlage aufweist, der eine Kondensation des Mittels in den Verflüssigern (41,42,43) zuläßt.

11. Verwendung der Anlage nach einem der vorstehenden Ansprüche zur Beheizung von Innenräumen R in Gebäuden.
